# EUROPÄISCHE PATENTSCHRIFT

(11) **EP 2 213 874 B1**
(45) Veröffentlichungstag und Bekanntmachung des Hinweises auf die Patenterteilung: **01.04.2015**
(21) Anmeldenummer: 10000849.9
(22) Anmeldetag: 28.01.2010
(51) Int. Cl.: F03D 7/04, F03D 7/02

(54) **Verfahren zum Betrieb eines Windparks**
Method for operating a wind farm
Procédé destiné au fonctionnement d'un parc éolien

(30) Priorität: 29.01.2009 DE 102009006671
(43) Veröffentlichungstag der Anmeldung: 04.08.2010
(73) Patentinhaber: Nordex Energy GmbH, 22419 Hamburg (DE)
(72) Erfinder: Jurkat, Mark, 22844 Norderstedt (DE)
(74) Vertreter: Hauck Patentanwaltspartnerschaft mbB

(56) Entgegenhaltungen:
- EP-A2- 1 672 778
- EP-A2- 1 672 779
- US-A1- 2007 001 461

## Beschreibung

Die vorliegende Erfindung betrifft ein Verfahren zum Betrieb eines Windparks mit zwei oder mehr Windenergieanlagen.

Für den Anschluss von Windparks an das elektrische Versorgungsnetz existiert eine Vielzahl von unterschiedlichen Netzanschlussrichtlinien, die teilweise Anforderungen an und Begrenzungen für die eingespeiste Leistung enthalten. Bei den Leistungsanforderungen können auch sogenannte Anstiegsbegrenzungen vorgesehen sein, die einem Windpark vorgeben, in welchem Maße die eingespeiste Leistung erhöht oder erniedrigt werden darf. Konkret bedeutet dies, dass, wenn der Windpark startet oder das Windangebot steigt, die Leistung nicht so schnell steigen darf, wie es technisch für den Windpark möglich ist, sondern über eine oder mehrere Anstiegsrampen begrenzt werden muss. In einem konkreten Fall kann dies beispielsweise maximal 3,0 MW/Min und maximal 20 MW/10 Min sein, wobei sich der Anstieg von 3,0 MW pro Minute auf den über eine Minute gemittelten Wert bezieht, ebenso wie der Anstieg von 20 Megawatt sich auf den 10 Minuten Mittelwert bezieht. Dies bedeutet, dass in einer Minute der maximale Leistungsanstieg des Windparks 3,0 Megawatt betragen darf, aber gleichzeitig in einem Zeitraum von 10 Minuten die Leistungserhöhung nicht mehr als 20 Megawatt betragen darf.

Aus US 2007/0173982 A1 sind ein System und ein Verfahren zur Steuerung einer Anstiegsbegrenzung bekannt. In einer ersten Alternative wird ausgehend von einer Leistung zum Zeitpunkt t=0 eine Leistung für den Zeitpunkt t=n berechnet, indem eine anfängliche Anstiegsbegrenzung mit der Zeitdauer multipliziert und zu dem momentanen Leistungswert addiert wird. In einer alternativen Ausgestaltung wird ein Feld von n Leistungswerten berechnet, wobei jeder der Leistungswerte ausgehend von einem Startwert über die anfängliche Gradientenbegrenzung berechnet wird. Über eine Minimumsbildung über das Feld der zukünftigen Leistungswerte wird ein zukünftiger Leistungssollwert berechnet. In einem weiteren bekannten Verfahren wird dieselbe Betrachtung, die für zukünftige Leistungswerte angestellt wurde, teilweise rückschauend für die Vergangenheit durchgeführt.

Aus Mark Cardinal et al., "Grid Friendly Wind Plant Controls: WindCONTROL™ - Field Test Results", WindPower 2006, 6. Juni 2006, Pittsburgh, PA ist eine Regelung eines Windparks bekannt, bei der maximale Änderungsraten der von dem Windpark in ein Energieversorgungsnetz eingespeisten Leistung überwacht werden. Ist für eine Gesamtänderung der Leistung eines Windparks ein Maximalwert erreicht, so werden die Windenergieanlagen gedrosselt.

Aus EP 1 672 779 A2 ist eine Vorrichtung und ein Verfahren zur Steuerung des Gradientenanstiegs bekannt, bei dem der Leistungsanstieg für einen Windpark ausgehend von dem Leistungsanstieg der einzelnen Windenergieanlagen in dem Windpark kontrolliert wird.

Der Erfindung liegt die Aufgabe zugrunde, ein Verfahren zum Betrieb eines Windparks bereitzustellen, bei dem eine Parksteuerung einen Sollwert für eine zu erzeugende elektrische Größe des Windparks so vorgibt, dass eine kontinuierliche Erhöhung der elektrischen Größe erfolgt und eine treppenförmige oder mit Knicken versehene Erhöhung der elektrischen Größe vermieden wird.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren dient zum Betrieb eines Windparks mit zwei oder mehr Windenergieanlagen. Der Windpark weist eine Parksteuerung auf, die einen Sollwert für eine zu erzeugende elektrische Größe des Windparks vorgibt. Bei dem erfindungsgemäßen Verfahren berechnet die Parksteuerung fortlaufend eine mittlere Steigerung der Istwerte der elektrischen Größe für mindestens ein Zeitintervall. Ferner vergleicht die Parksteuerung die berechnete mittlere Steigerung der Istwerte für ein Zeitintervall, mit einem Maximalwert für die Steigerung der elektrischen Größe in dem entsprechenden Zeitintervall. Bei dem erfindungsgemäßen Verfahren kommen ein, zwei oder mehr Zeitintervalle zum Einsatz, für die fortlaufend die mittlere Steigerung berechnet wird und ein Maximalwert der Steigerung definiert ist. Die Parksteuerung bestimmt einen neuen Sollwert der elektrischen Größe des Windparks, wenn die mittleren Steigerungen kleiner als der Maximalwert sind. Im Fall, wenn mehrere Zeitintervalle betrachtet werden, wird ein neuer Sollwert dann bestimmt, wenn sämtliche mittlere Steigerungen kleiner als die zugehörigen Maximalwerte in dem Zeitintervall sind. Für den Fall, dass die mittlere Steigerung in einem Zeitintervall bereits größer als der Maximalwert für die Steigerung in einem Zeitintervall ist, ist es nicht notwendig, einen neuen Sollwert zu bestimmen, da der Windpark mit seiner Änderung bereits den Maximalwert für die Steigerung der elektrischen Größe überschritten hat. Der neue Sollwert der elektrischen Größe des Windparks wird erfindungsgemäß aus einer Sollwertauswahl als Minimum von mehreren Sollwertvorschlägen bestimmt. Die Sollwertvorschläge werden von der Parksteuerung einzeln für jedes in Betracht gezogene Zeitintervall ermittelt. Dabei wird für jedes Zeitintervall ausgehend von den fortlaufend über das Zeitintervall gemittelten Istwerten der elektrischen Größe ein Sollwertvorschlag ermittelt. Der Sollwertvorschlag für ein Zeitintervall wird aus den über das Zeitintervall gemittelten Istwerten zuzüglich des mit dem Gradientenfaktor multiplizierten Maximalwertes für die Steigerung der elektrischen Größe in dem Zeitintervall bestimmt, wobei der Gradientenfaktor größer null und kleiner eins ist. Der Gradientenfaktor berücksichtigt hierbei, dass, wenn der Maximalwert für die Steigerung der elektrischen Größe vollständig addiert würde, über das Zeitintervall sich eine größere Steigerung ergäbe. Der Gradientenfaktor kleiner als eins stellt somit sicher, dass eine in dem Zeitintervall mehrfach wiederholte Addition des Maximalwerts für die Steigerung nicht zu einer zu starken Erhöhung des Istwerts führt.

Bei dem erfindungsgemäßen Verfahren wird, um einen kontinuierlichen Anstieg der Sollwerte der elektrischen Größe zu erreichen und gleichzeitig die vorgegebenen Maximalwerte einzuhalten bei der Ermittlung des Sollwertvorschlags auf einen fortlaufend über das betrachtete Zeitintervall ermittelten Istwert abgestellt. Der Erfindung liegt die Erkenntnis zugrunde, dass mit der Verwendung des fortlaufend über den Zeitwert gemittelten Istwerts vermieden werden kann, dass eine stufenförmige Erhöhung der Sollwerte auftritt oder dass die Sollwerte Absätze bilden. Das erfindungsgemäße Verfahren führt zu einem kontinuierlichen Anstieg der Sollwerte.

In einer bevorzugten Ausgestaltung können als weitere Sollwertvorschläge auch extern an der Parksteuerung anliegende Werte für eine maximale zulässige Änderung der elektrischen Größe bei der Sollwertzahl berücksichtigt werden. Indem bei der Sollwertauswahl stets das Minimum der Sollwertvorschläge berücksichtigt wird, können die beispielsweise von einem durch die Versorgungsunternehmen kurzfristig bestimmten begrenzten Anstiege der elektrischen Größe mitberücksichtigt werden.

In einer weiteren bevorzugten Ausgestaltung teilt die Windparksteuerung zusätzlich den Sollwert für die elektrische Größe des Windparks auf die mindestens zwei Windenergieanlagen auf. Bei der Aufteilung der Sollwerte für den Windpark auf die einzelnen Windenergieanlagen wird bevorzugt der Istwert der elektrischen Größe der einzelnen Windenergieanlage berücksichtigt. Auf diese Weise kann sichergestellt werden, dass einer Windenergieanlage im Windpark, deren elektrische Größe sich beispielsweise bereits in der Nähe des Nennbereichs der Windenergieanlage befindet, nicht ein über den Nennbereich hinaus erhöhter Sollwert vorgegeben wird.

In einer bevorzugten Ausgestaltung ist der Gradientenfaktor eine zeitlich konstante Größe. Auch ist es möglich, den Gradientenfaktor abhängig von der Länge des Zeitintervalls, das betrachtet wird, zu wählen.

Bei dem erfindungsgemäßen Verfahren können für die elektrische Größe des Windparks verschiedene Größen betrachtet werden. So ist es möglich, auf eine Wirkleistung, eine Blindleistung, einen Leistungsfaktor, einen Phasenwinkel, eine Frequenz oder eine Spannung in einem Übergabepunkt zwischen Windpark und elektrischem Versorgungsnetz abzustellen. Auch ist es möglich, Kombinationen dieser Größen zu betrachten.

Bei dem erfindungsgemäßen Verfahren wird zur Berechnung eines Sollwertvorschlags auf eine fortlaufend gemittelte Istwertgröße abgestellt. Dadurch können bei einer Leistungserhöhung des Windparks Absätze und Knicke in den Sollwerten vermieden werden. Bei diesem Ansatz ist es zweckmäßig, dass in einer Anfangsphase des Betriebes des Windparks, in der die Windenergieanlagen die erzeugte elektrische Größe gegenüber einem quasistationären Zustand oder einem heruntergefahrenen Zustand erhöhen, also noch keine zurückliegenden Istwerte vorliegen oder diese noch nicht für das gesamte betrachtete Zeitintervall vorliegen, zu den Sollwertvorschlägen für das Zeitintervall jeweils ein Offset hinzu addiert wird. Dieser Offset in der Anfangsphase des Betriebes des Windparks stellt sicher, dass beim Hochfahren der Sollwerte keine zu starke Verzögerung des Mittelwerts auftritt. In einer bevorzugten Ausgestaltung ist vorgesehen, dass der Offset mit zunehmender Zeitdauer seit Beginn der Anfangsphase abnimmt.

Eine bevorzugte Ausgestaltung des erfindungsgemäßen Verfahrens wird nachfolgend an einem Beispiel näher erläutert. Es zeigt:
- Fig. 1: die von einem Windpark bereitgestellte Wirkleistung in Megawatt über der Zeit, einmal für das erfindungsgemäße Verfahren und einmal für ein Verfahren aus dem Stand der Technik,
- Fig. 2: ein Blockdiagramm zur Bestimmung der Sollwerte der einzelnen Windenergieanlagen,
- Fig. 3: ein Flussdiagramm zu dem erfindungsgemäßen Verfahren,
- Fig. 4: ein Blockdiagramm zu einem Sollwertbildner und
- Fign. 5a und b: jeweils ein Ablaufdiagramm für das erfindungsgemäße Verfahren.

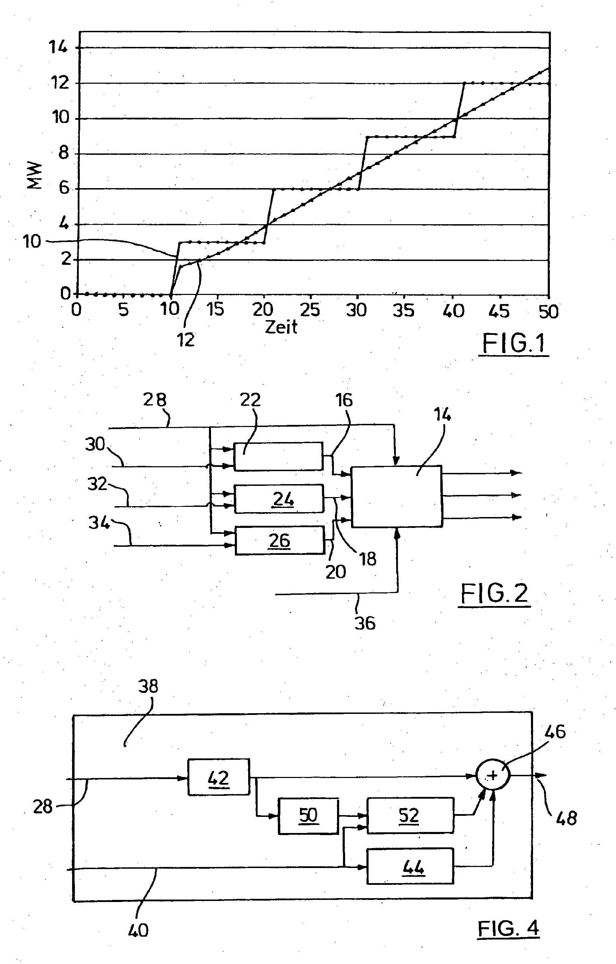

Fig. 1 zeigt die zeitliche Entwicklung der Sollwerte für die einzuspeisende Wirkleistung in einem Übergabepunkt des Windparks. Bei der durch die runden Punkte gebildeten Kurve 10 werden die Sollwerte nach einem der Verfahren aus dem Stand der Technik berechnet. Hierbei kann die Situation auftreten, dass für den Windpark der maximale Leistungsanstieg für ein Zeitintervall von 10 Minuten definiert ist. Wenn der Windpark also den Leistungsanstieg in deutlich weniger als 10 Minuten bewältigen kann, dann treten die in Fig. 1 dargestellten Treppen auf. Bei dem erfindungsgemäßen Verfahren, dessen Sollwert durch die Dreiecke dargestellt ist, zeigt die Linie 12 einen ungefähr linearen Anstieg der Sollwertkurve. Der Sprung zu Beginn an der Kurve 12 kurz nach dem Starten des Windparks entsteht durch einen zusätzlichen Offset, der weiter unten noch im Detail erläutert wird. Kurve 12 ist **dadurch gekennzeichnet, dass** Absätze der Sollwertkurve vermieden werden.

Fig. 2 zeigt in einem Blockdiagramm die Berechnung der Sollwerte für Windenergieanlagen WEA 1, WEA 2 bis WEA n. Zur Berechnung der Sollwerte für die einzelnen Windenergieanlagen liegen an einer Sollwertauswahl und einem Regler 14 verschiedene Sollwertvorschläge 16 bis 20 an. Die Sollwertvorschläge werden von einzelnen Sollwertbildnern 22 bis 26 generiert. Hierbei bezieht sich der Sollwertbildner 1 nicht auf einen Sollwert für die erste Windenergieanlage, sondern vielmehr auf einen Sollwertvorschlag für den gesamten Windpark unter Berücksichtigung eines ersten Zeitintervalls. In dem dargestellten Beispiel aus Fig. 2 werden also ein erstes Zeitintervall, ein zweites Zeitintervall und mit dem Sollwertbildner 26 ein drittes Zeitintervall betrachtet.

An jedem Sollwertbildner liegt der aktuelle Wert der Wirkleistung 28 an. Ferner liegt an jedem Sollwertbildner 22 bis 26 ein Gradientensollwert an. Die Gradientensollwerte 30 bis 34 geben dabei jeweils den maximal zulässigen Anstieg für den Mittelwert des entsprechenden Zeitintervalls vor. Gradientensollwert 1 gibt also beispielsweise einen Wert von 3,0 MW pro 1-Minuten-Mittelwert vor, während Gradientensollwert 2 einen Wert von 20 MW pro 10-Minuten-Mittelwert vorgibt. Jeder Sollwertbildner 22 bis 26 berechnet einen Sollwertvorschlag, der für ein entsprechendes Zeitintervall einen Sollwert des gesamten Windparks angibt.

In der Sollwertauswahl 14 und dem dazugehörigen Regler wird von den Sollwertvorschlägen 16, 18, 20 der kleinste Wert ausgewählt. In einem weiteren Schritt werden außer dem ausgewählten Sollwert für den Windpark die Sollwerte für die einzelnen Windenergieanlagen bestimmt. Hierbei werden die Istwerte der einzelnen Windenergieanlagen (nicht dargestellt) berücksichtigt, um so Sollwerte für die einzelnen Windenergieanlagen zu bestimmen.

Bei der Ermittlung des Sollwerts für den Windpark ausgehend von den Sollwertvorschlägen 16, 18, 20 können auch weitere Sollwertlimitierungen 36 bei der Sollwertauswahl berücksichtigt werden. So ist es beispielsweise möglich, dass ein Energieversorgungsunternehmen der Parksteuerung des Windparks zusätzlich Sollwertlimitierungen 36 vorgibt, die bei Auswahl der Sollwerte berücksichtigt werden.

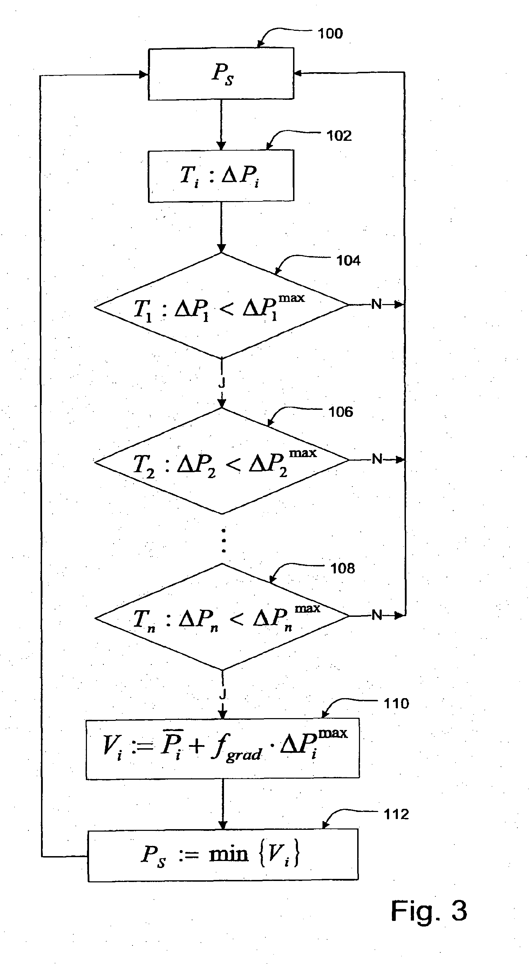

Fig. 3 zeigt beispielhaft den Ablauf des erfindungsgemäßen Verfahrens zum Betrieb eines Windparks. Der Windpark wird von einer Parksteuerung mit einem Sollwert für eine Wirkleistung P_{S} 100 betrieben. Frischt der Wind auf, so kann der Sollwert P_{S} für die Wirkleistung deutlich größer sein als der aktuelle Istwert der Wirkleistung. Dies führt dazu, dass die Wirkleistung in dem Windpark schnell erhöht wird. Bei dem erfindungsgemäßen Verfahren wird für eine Reihe von Zeitintervallen Tᵢ, i = 1, ..., n, die mittlere Steigerung der Istwerte der Wirkleistung ΔPᵢ in Verfahrensschritt 102 berechnet. In den nachfolgenden Verfahrensschritten 104, 106 und 108 wird danach jeweils überprüft, ob die mittlere Steigerung ΔP₁, ΔP₂ oder ΔPₙ kleiner als ein Maximalwert für die Steigerung in dem entsprechenden Zeitintervall ΔPᵢ^{max} ist. Je nach Anzahl ⁿ der definierten Zeitintervalle Tᵢ erfolgt für jedes Zeitintervall die Überprüfung, ob der Maximalwert für die Steigerung der Wirkleistung in dem Zeitintervall überschritten wurde. Wird festgestellt, dass in einem der Zeitintervalle bereits der Maximalwert für die Steigerung der Wirkleistung in dem Zeitintervall erreicht wurde, kehrt das Verfahren zu seinem Ausgangspunkt 100 zurück.

Für den Fall, dass in sämtlichen Zeitintervallen Tᵢ die mittlere Steigerung der Wirkleistung in dem Zeitintervall unterhalb der maximal zulässigen Steigerung liegt, wird in Verfahrensschritt 110 für jedes Zeitintervall ein Sollwertvorschlag Vᵢ berechnet. Die Berechnung des Sollwertvorschlags Vᵢ erfolgt ausgehend von dem mittleren Sollwert *P̅ᵢ* in dem Zeitintervall Tᵢ zuzüglich dem Maximalwert für die Änderung der Wirkleistung in dem Zeitintervall ΔPᵢ^{max} multipliziert mit einem Gradientenfaktor f_{grad}. Aus diesem Satz von Sollwertvorschlägen {Vi, i = 1, ..., n}wird unter Verfahrensschritt 112 ein neuer Sollwert Pₛ berechnet. Der neue Sollwert Pₛ ergibt sich als das Minimum sämtlicher Sollwertvorschläge.

Mit dem Verfahren wird sichergestellt, dass bei einer Leistungssteigerung des Windparks die für die Zeitintervalle definierten Maximalwerte ΔPᵢ^{max} nicht überschritten werden, gleichzeitig aber eine stetige Leistungssteigerung erfolgt, die Sprünge und Knicke bei der Leistungssteigerung vermeidet.

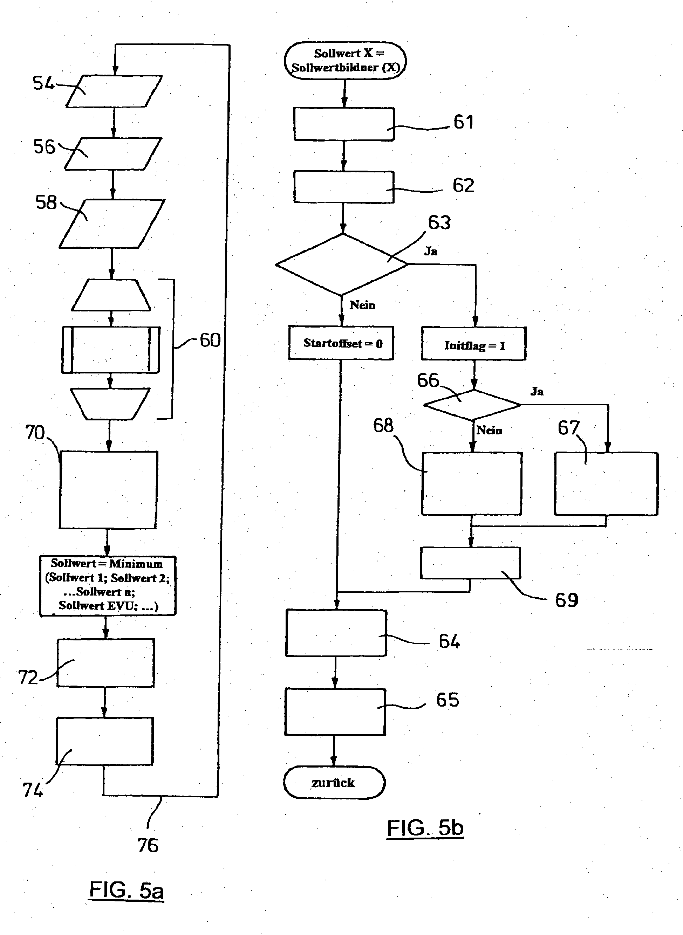

Fig. 4 zeigt einen Sollwertbildner im Detail. An dem Sollwertbildner 38, dieser entspricht einem der Sollwertbildner 22, 24 oder 26 aus Fig. 2, liegt der Istwert der Wirkleistung 28 und ein Gradientensollwert 40 an. Aus dem Istwert der Wirkleistung 28 wird in einem ersten Schritt 42 ein Mittelwert für das Zeitintervall bestimmt, für das der Sollwertbildner 38 vorgesehen ist. Im regulären Betrieb des Windparks wird zusätzlich der anliegende Gradientensollwert 40 mit einem Gradientenfaktor 44 multipliziert und der gebildete Mittelwert mit dem Produkt in 46 addiert. Der Ausgang des Sollwertbildners 38 ist dann ein Sollwertvorschlag 48. Aus dem gebildeten Mittelwert 42 wird ein Mittelwertgradient 50 berechnet. Der Mittelwertgradient ist die Änderung des Mittelwerts über dem betrachteten Zeitintervall. Aus dem Mittelwertgradienten und dem Gradientensollwert 40 wird dann die Offsetfunktion 52 gebildet. Das Ergebnis der Offsetfunktion 52 wird gemeinsam mit dem Ergebnis aus der Multiplikation mit dem Gradientenfaktor 44 in Schritt 46 addiert und bildet so gemeinsam den Sollwertvorschlag 48. Die Bestimmung der Offsetfunktion ist in den Fign. 5 zu Schritt 60 im Detail beschrieben.

Fig. 5a zeigt das erfindungsgemäße Verfahren im Gesamtverfahrensablauf. In einem ersten Schritt 54 werden die Parameter des Verfahrens eingelesen. In einem nachfolgenden Schritt 56 werden die Istwerte der Leistung und in Schritt 58 werden die Sollleistungswerte von dem EVU eingelesen. In Schritt 58 werden gleichzeitig auch die maximalen Gradientensollwerte, die durch das EVU vorgegeben sind, eingelesen. In einem nachfolgenden Schritt 60 wird für jedes der betrachteten Zeitintervalle 1 bis n jeweils ein Sollwertvorschlag gebildet. Die Bildung des Sollwerts ist in Fig. 5b im Detail dargestellt. Hierzu wird in Schritt 61 der Mittelwert über das betrachtete Zeitintervall gebildet. In Schritt 62 wird der Istwert der Steigerung für das Zeitintervall aus dem gebildeten Mittelwert für das Zeitintervall bestimmt. In Schritt 63 wird abgefragt, ob der Istwert des Gradienten für das vorbestimmte Zeitintervall kleiner als ein vordefinierter Startwert ist oder ob ein Startoffset größer null ist. Für den Fall, dass der Istwert des Gradienten für das Zeitintervall größer als ein Startwert ist oder der Startoffset gleich null ist, wird ein Initflag gesetzt und der Gradientenoffset in Schritt 64 aus dem Sollwertgradienten multipliziert mit dem Gradientenfaktor berechnet. Der neue Sollwertvorschlag für das Zeitintervall ergibt sich dann in Schritt 65 aus dem Mittelwert plus dem vorberechneten Gradientenoffset für das Zeitintervall. Hierzu wird in Schritt 65 zusätzlich der Startoffset für das Zeitintervall addiert, das allerdings in dem betrachteten Fall gleich null ist.

Wird dagegen bei Abfrage 63 festgestellt, dass eine der Bedingungen erfüllt ist, so liegt eine Startphase vor. In der Startphase wird zusätzlich ein Startoffset für die Berechnung des Sollwertvorschlags in Schritt 65 berechnet. Hierzu wird in Schritt 66 zunächst überprüft, ob eine erste Berechnung des Startoffsets erfolgt, indem das Initflag abgefragt wird. In diesem Fall wird in Schritt 67 der Startoffset für das Zeitintervall aus dem Sollwertgradienten multipliziert mit einem Startoffsetfaktor für das Zeitintervall gebildet. Erfolgt nicht eine erste Berechnung des Startoffsets, so wird der Startoffset aus dem vergangenen Durchlauf in Schritt 68 reduziert. Hierzu wird von dem Startoffset ein bestimmter Wert abgezogen. Der abzuziehende Wert ergibt sich aus dem Sollwertgradient multipliziert mit dem Startoffsetfaktor für das betrachtete Zeitintervall dividiert durch eine Abklingzahl für das Zeitintervall. Im Ergebnis führt der Verminderungsschritt 68 dazu, dass im Laufe der Zeit der Wert des Startoffsets für das Zeitintervall schrittweise reduziert wird. In einem nachfolgenden Schritt 69 wird sichergestellt, dass kein negativer Startoffset im weiteren Ablauf verwendet wird. Die Berechnung des Startoffsets erfolgt durch die Verfahrensschritte 64 und 65, wobei nun in dem Verfahrensschritt 65 zusätzlich ein Wert für den Startoffset für den Sollwertvorschlag berechnet wird.

In Verfahrensschritt 70 wird das Minimum der in Verfahrensschritt 60 berechneten Sollwertvorschläge gebildet. Hierbei werden auch Sollwertvorgaben zur Begrenzung des Windparks von dem EVU berücksichtigt. In einem nachfolgenden Schritt 72 wird die Stellgröße für den Windpark ermittelt, indem ein Soll-Istwertvergleich durchgeführt wird. In einem nachfolgenden Schritt 74 folgt eine Verteilung der Stellgrößen aus dem Windpark auf einzelne Windenergieanlagen. Die einzelnen Windenergieanlagen regeln dann unabhängig voneinander auf den ihnen vorgegebenen Sollwert. Über den Ast 76 kehrt das Verfahren zu seinem Ausgangszustand zurück und wird dann zyklisch wiederholt.

## Patentansprüche

1. Verfahren zum Betrieb eines Windparks mit zwei oder mehr Windenergieanlagen, der eine Parksteuerung aufweist, die einen Sollwert für eine zu erzeugende elektrische Größe des Windparks vorgibt, wobei
- die Parksteuerung fortlaufend eine mittlere Steigerung der Istwerte der elektrischen Größe für mindestens ein Zeitintervall berechnet und jeweils mit einem Maximalwert für die Steigerung der elektrischen Größe in dem Zeitintervall vergleicht, **dadurch gekennzeichnet, dass**
- die Parksteuerung für den Fall, dass die mittlere Steigerung in jedem des mindestens einen Zeitintervalls kleiner als der Maximalwert für die Steigerung in dem entsprechenden Zeitintervall ist, einen neuen Sollwert der elektrischen Größe des Windparks bestimmt, indem
- die Parksteuerung für jedes Zeitintervall ausgehend von einem fortlaufend über das Zeitintervall gemittelten Istwert der elektrischen Größe einen Sollwertvorschlag ermittelt, der die Summe aus dem über das Zeitintervall gemittelten Istwert und dem Maximalwert für die Steigerung der elektrischen Größe in dem Zeitintervall multipliziert mit einem Gradientenfaktor darstellt, wobei der Gradientenfaktor größer null und kleiner eins ist, und die Parksteuerung ferner aus den Sollwertvorschlägen einen kleinsten Wert als neuen Sollwert für den Windpark auswählt.

2. Verfahren nach Anspruch 1, **dadurch gekennzeichnet, dass** als weitere Sollwertvorschläge extern an der Parksteuerung anliegende Werte für eine maximal zulässige Änderung der elektrischen Größe bei der Sollwertauswahl berücksichtigt werden.

3. Verfahren nach Anspruch 1 oder 2, **dadurch gekennzeichnet, dass** die Windparksteuerung zusätzlich den Sollwert für die elektrische Größe des Windparks auf die mindestens zwei Windenergieanlagen aufteilt.

4. Verfahren nach Anspruch 3, **dadurch gekennzeichnet, dass** die Aufteilung des Sollwerts auf die einzelnen Windenergieanlagen abhängig vom Istwert der elektrischen Größe der einzelnen Windenergieanlagen erfolgt.

5. Verfahren nach einem der Ansprüche 1 bis 4, **dadurch gekennzeichnet, dass** der Gradientenfaktor konstant ist.

6. Verfahren nach einem der Ansprüche 1 bis 4, **dadurch gekennzeichnet, dass** der Gradientenfaktor von der Länge des Zeitintervalls abhängt.

7. Verfahren nach einem der Ansprüche 1 bis 6, **dadurch gekennzeichnet, dass** die elektrische Größe eine der folgenden elektrischen Größen ist: Wirkleistung, Blindleistung, Scheinleistung, Wirkstrom, Blindstrom, Scheinstrom, Leistungsfaktor, Phasenwinkel, Frequenz oder Spannung in einem Übergabepunkt zwischen Windpark und elektrischem Versorgungsnetz.

8. Verfahren nach einem der Ansprüche 1 bis 7, **dadurch gekennzeichnet, dass** in einer Startphase des Windparks zu den Sollwertvorschlägen für die Zeitintervalle jeweils ein Offset hinzu addiert wird.

9. Verfahren nach Anspruch 8, **dadurch gekennzeichnet, dass** der Offset mit zunehmender Zeitdauer seit Beginn der Startphase abnimmt.

## Claims

1. A method for operating a wind farm having two or more wind turbines, which comprises a farm controller which presets a desired value for an electric variable of the wind farm to be generated, wherein the farm controller continuously calculates an average increase of the actual values of the electric variable for at least one time interval and compares it with a maximum value for the increase of the electric variable in said time interval, **characterized in that**
- the farm controller determines, in case that the average increase in each of the at least one time interval is smaller than the maximum value for the increase in said time interval, a new desired value for the electric variable of the wind farm by
- the farm controller determining a proposed desired value for each time interval based on an actual value of the electrical variable continuously averaged over said time interval, as the sum of the actual value of the electrical variable averaged over said time interval plus the maximum value for the increase of the electric variable in said time interval multiplied by a gradient factor, wherein the gradient factor is greater than zero and smaller than one and
- the farm controller is further selecting a minimum value from the determined proposed desired values as the new desired value for the wind farm.

2. Method according to claim 1, **characterised in that** values for a maximum permissible change of the electric variable applied externally to the farm controller are incorporated as additional proposed desired values in selecting the new desired value.

3. Method according to claim 1 or 2, **characterised in that** the wind farm controller additionally apportions the new desired value for the electric variable of the wind farm to the at least two wind turbines.

4. Method according to claim 3, **characterised in that** the apportioning of the desired value to the individual wind turbines takes place depending on the actual value of the electric variable of the individual wind turbines.

5. Method according to any one of claims 1 to 4, **characterised in that** the gradient factor is constant.

6. Method according to any one of claims 1 to 4, **characterised in that** the gradient factor depends on the length of said time interval.

7. Method according to any one of claims 1 to 6, **characterised in that** the electric variable is one of the following variables: effective power, reactive power, apparent power, effective current, reactive current, apparent current, power factor, phase angle, frequency or voltage at an interconnection point between the wind farm and an electric supply grid.

8. Method according to any one of claims 1 to 7, **characterised in that** in a starting phase of the wind farm, an offset is added to each of the proposed desired values for said time intervals.

9. Method according to claim 8, **characterised in that** said offset decreases with increasing time duration since the beginning of the starting phase.

## Revendications

1. Procédé pour l'opération d'un parc éolien avec deux ou plus éoliennes, qui a un système de commande du parc qui prescrit une valeur de consigne pour une grandeur électrique du parc éolien qu'il faut générer, dans lequel le système de commande du parc calcule continuellement une croissance moyenne des valeurs réelles de la grandeur électrique pour au moins un intervalle de temps and et la compare avec au moins une valeur maximale pour la croissance de la grandeur électrique dans cet intervalle de temps, **caractérisé en ce que**
• dans le cas que la croissance moyenne dans chacun des au moins un intervalle de temps est plus petite que la valeur maximale pour la croissance dans l'intervalle de temps correspondant, le système de commande du parc assigne une nouvelle valeur de consigne de la grandeur électrique du parc éolien, en ce que
• pour chaque intervalle de temps, le système de commande du parc établit une suggestion pour la valeur de consigne, en partant d'une valeur réelle de la grandeur électrique continuellement moyennée sur l'intervalle de temps, ladite suggestion représentant la somme de la valeur réelle de la grandeur électrique moyennée sur l'intervalle de temps et la valeur maximale pour la croissance de la grandeur électrique dans cet intervalle de temps, multipliée par un facteur de gradient, le facteur de gradient étant plus que zéro et plus petit qu'un, et en plus,
• le système de commande du parc sélectionne une valeur plus petite comme la nouvelle valeur de consigne pour le parc éolien à partir des suggestions pour la valeur de consigne.

2. Procédé selon la revendication 1, **caractérisé en ce que** des valeurs pour un changement de la grandeur électrique maximalement permissible, appliquées de l'extérieur au système de commande du parc, sont considérées comme des suggestions additionnelles pour la valeur de consigne dans la sélection des valeurs de consigne.

3. Procédé selon la revendication 1 ou 2, **caractérisé en ce que** le système de contrôle du parc éolien répartit en outre la valeur de consigne pour la grandeur électrique du parc éolien entre les au moins deux éoliennes.

4. Procédé selon la revendication 3, **caractérisé en ce que** la répartition de la valeur de consigne aux éoliennes individuelles est faite en fonction de la valeur réelle de la grandeur électrique des éoliennes individuelles.

5. Procédé selon l'une quelconque des revendications 1 à 4, **caractérisé en ce que** le facteur de gradient est constant.

6. Procédé selon l'une quelconque des revendications 1 à 4, **caractérisé en ce que** le facteur de gradient dépend de la longueur de l'intervalle de temps.

7. Procédé selon l'une quelconque des revendications 1 à 6, **caractérisé en ce que** la grandeur électrique est une des grandeurs électriques suivantes: puissance active, puissance réactive, puissance apparente, courant actif, courant réactif, courant apparent, facteur de puissance, angle de phase, fréquence ou tension dans un point de transfert entre parc éolien et point d'alimentation du réseau électrique.

8. Procédé selon l'une quelconque des revendications 1 à 7, **caractérisé en ce que** dans une phase initiale du parc éolien, une déduction est ajoutée à chaque suggestion de la valeur de consigne pour les intervalles de temps.

9. Procédé selon la revendication 8, **caractérisé en ce que** la déduction décroit avec durée de temps croissante depuis le commencement de la phase initiale.
